# EUROPÄISCHE PATENTSCHRIFT

(11) **EP 1 764 522 B1**
(45) Veröffentlichungstag und Bekanntmachung des Hinweises auf die Patenterteilung: **29.07.2009**
(21) Anmeldenummer: 06019319.0
(22) Anmeldetag: 15.09.2006
(51) Int. Cl.: F16C 33/20

(54) **Lagerelement**
Bearing element
Elément de palier

(30) Priorität: 16.09.2005 AT 15322005
(43) Veröffentlichungstag der Anmeldung: 21.03.2007
(73) Patentinhaber: Miba Gleitlager GmbH, 4663 Laakirchen (AT)
(72) Erfinder: Gärtner, Walter, 4810 Gmunden (AT); Kienberger, Manfred, 4643 Pettenbach (AT); Lang, Hubert, 4332 Au an der Donau (AT)
(74) Vertreter: Ofner, Clemens

(56) Entgegenhaltungen:
- EP-A- 1 342 806
- GB-A- 2 345 095
- US-A1- 2003 180 572

## Beschreibung

Die Erfindung betrifft ein Lagerelement umfassend eine Stützschicht, eine über der Stützschicht angeordnete Lagermetallschicht und eine über der Lagermetallschicht angeordnete, aufgesputterte Gleitschicht, siehe z.B. US 2003/0180572 A1, welche ein gattungsgemäßes Lagerelement zeigt.

Der technische Fortschritt in der Motorenindustrie bedingt, dass an Lagerelemente, wie z.B. Gleitlager, immer härtere Anforderungen gestellt werden. Einschichtgleitlager können diesen Anforderungen, beispielsweise gegenüber fressendem Verschleiß, auf Grund eines sich bei hohen Drehzahlen verdünnenden Ölfilms nicht mehr gerecht werden, sodass die Gleitlagerindustrie vermehrt auf Mehrschichtgleitlager ausweicht. Diese bestehen üblicherweise aus einer Stahlstützschicht, auf die eine oder mehrere weitere Schichten durch Aufwalzen, Plattieren oder Sputtern aufgebracht werden. Diese weiteren Schichten sind zum einen die Lagermetallschicht, welche gegebenenfalls unter Zwischenschaltung einer Bindeschicht auf der Stahlstützschicht befestigt wird. Auf dieser Lagermetallschicht wird, gegebenenfalls unter Zwischenschaltung einer Bindeschicht oder einer Diffusionssperrschicht, die Gleitschicht aus einer Legierung, beispielsweise einer Aluminiumlegierung mit mehr oder weniger hohem Zinnanteil, oder aus einem Gleitlack aufgebracht.

Durch derartige Beschichtungsabfolgen tribologisch beanspruchter Bauteile bzw. Flächen sollen einerseits höhere Zünddrücke für verbesserte Thermodynamik, und damit in der Folge verringertem Verbrauch bzw. minimierten Abgasmengen, ermöglicht werden. Andererseits fordert die Motorindustrie, neben der Steigerung des Wirkungsgrades, d.h. der spezifischen Leistung und damit der Wirtschaftlichkeit und der höheren Umweltverträglichkeit von Verbrennungskraftmaschinen, auch leichtere Motoren, woraus kleinere Dimensionen der einzelnen Bauteile resultieren. Damit einhergehend sollen auch, insbesondere bei höheren Temperaturen, dünnflüssigere Schmieröle Verwendung finden um geringere Reibleistungen zu erhalten. Die geforderte Lebensdauer von Kraftfahrzeugen, insbesondere Nutzfahrzeugen liegt bei mindestens ca. 1 Mio. Kilometer und sollen auch die Wartungsintervalle immer länger werden, wodurch Inspektionsmöglichkeiten für Gleitelemente, um deren Verschleiß feststellen zu können, in geringerem Ausmaß zur Verfügung stehen. Mit anderen Worten muss die durchschnittliche Lebensdauer eines Gleitelementes deutlich erhöht werden.

Diese Anforderungen führen zu höherer spezifischer Belastung der Gleitelemente, sowie zu höheren dynamischen Spannungen. Weiters werden kleinere Schmierspalte ausgebildet, wodurch mehr und intensivere Mischreibung auftritt. Dies kann dazu führen, dass örtlich, z.B. an Kanten, Grenzreibung entsteht und lokal kein annähernd tragfähiger Schmierfilm ausgebildet wird. Durch die verminderte Abfuhr der beim Verbrennungsprozess entstehenden Wärme können in der Folge lokale Temperaturspitzen auftreten, welche Gleitlagerschichten zumindest bereichsweise zerstören können bzw. die Lebensdauer eines Gleitlagers beeinflussen.

Ausgehend davon ist es die Aufgabe der Erfindung, ein Gleitelement zur Verfügung zu stel-len, welches diesen Anforderungen gerecht wird.

Diese Aufgabe der Erfindung wird durch ein Lagerelement nach Anspruch 1 gelöst, welches als sogenanntes Sputterlager ausgebildet ist und das als vierte Schicht auf der Sputterschicht eine Gleitlackschicht aufweist.

Prinzipiell ist die Methode, tribologische Nachteile einer festen Schicht durch Aufbringen einer zusätzlichen weichen Schicht zu mindern, bekannt, führt aber bei der Lösung der vorliegende Aufgabenstellung nicht zum Ziel, weil die örtliche Geometrieanpassung durch Abtrag der weichen Schicht erfolgt, und bei Grenzreibung ein hoher Verschleiß und damit eine kurze Lebensdauer zu erwarten ist. Des Weiteren erweichen metallische Schichten bei höheren Temperaturen, sodass Partikel hiervon verschleppt werden und sich in Bereichen niedriger Temperatur aufgrund der inneren Affinität des Materials ansammeln und wieder verfestigen. Daraus resultieren Störungen der Schmierspaltgeometrie, die umso größer sind, je dicker die Schicht ist. Des Weiteren hat sich für die vorliegende Aufgabenerstellung der Reibwert metallischer Schichten als zu hoch herausgestellt. Ebenso wurde gefunden, dass ein Gleitlack auf herkömmlichen Untergründen von Gleitelementen nicht die geforderte Lebensdauer erreicht.

Durch die erfindungsgemäße Kombination einer Sputterschicht als Gleitschicht bzw. Laufschicht und einer darüber angeordneten Gleitlackschicht wird der Vorteil erreicht, dass die Gleitlackschicht, welche u.a. als Einlaufschicht konzipiert ist, nicht nur örtlich abgetragen wird sondern durch die dynamischen Belastungen auch der Untergrund verformt wird. Es wirken also beide Schichten an der Anpassung in der Einlaufphase mit und die Verschleißrate der Einlaufschicht wird dadurch deutlich reduziert. Grundsätzlich liegt ein anderer Wirkungsmechanismus als bei herkömmlichen Lagerelementen vor. Es ist damit auch möglich, dass nur der Untergrund, also die Gleit- bzw. Laufschicht verformt wird, ohne dass die Gleitlackschicht plastisch verformt wird. Es wurden keine Bereiche bei dem erfindungsgemäßen Lagerelement beobachtet, an denen abgetragene Partikel der Einlauf- bzw. Gleitschicht kumuliert auftreten, sodass die Schmierspaltgeometrie zumindest im Wesentlichen erhalten bleibt. Es wird damit auch möglich die Gleitlackschicht als dünne Schicht auszubilden. Im Vergleich zu herkömmlichen Gleitschichten, insbesondere auch Sputterschichten, ist damit eine höhere Anpassungsfähigkeit an das zu lagernde Element, beispielsweise eine Welle, erreichbar. Von Vorteil ist weiters, dass die Gleitlackschicht direkt auf die Gleitschicht aufgebracht werden kann, d.h. eine der herkömmlichen, dem Stand der Technik bekannten Gleitlager üblicherweise verwendete Nickelschicht als Diffusionssperre nicht mehr erforderlich ist, sodass ein erfindungsgemäßes Lagerelement nicht nur hinsichtlich seiner mechanischen Eigenschaften im Vergleich zu bekannten Mehrschichtgleitlagern verbessert ist, sondern darüber hinaus ein entsprechender Kostenvorteil bei der Herstellung des erfindungsgemäßen Lagerelementes erzielt werden kann.

Die Gleitlackschicht kann anisotrope Eigenschaften aufweisen, insbesondere in Belastungsrichtung, d.h. in Richtung senkrecht auf die Schichten, eine hohe mechanische Belastung ermöglichen bei gleichzeitig geringerer Scherfestigkeit in Richtung parallel zur Gleitlackschicht.

Die Gleitlackschicht kann als Hauptbestandteil zumindest ein thermoplastisches Harz enthalten, wobei dieses thermoplastische Harz insbesondere ausgewählt ist aus einer Gruppe umfassend Polyimide, insbesondere aromatische, Polyamidimide, insbesondere aromatische, Polyaryletherimide, gegebenenfalls modifiziert mit Isocyanaten, Phenolharze, Polyarylether-etherketone, Polyamide, insbesondere aromatische, Epoxyharze, Polytetrafluorethylen, fluorhältige Harze, wie z.B. Polyflouralkoxy-Polytetrafluorethylen-Copolymere, Ethylen-tetrafluorethylen, fluorierte Ethylen-Propylen Copolymere, Polyvinylidendifluorid, Polyvinylfluorid, Allylensulfid, Poly-triazo-Pyromellithimide, Polyesterimide, Polyarylsulfide, Polyvinylensulfide, Polysulfone, Polyarylsulfone, Polyaryloxide, Copolymere und Mischungen daraus, wie z.B. Polyimide und/oder Polyamidimide und/oder Polyaryletherimide und/oder Phenolharze und/oder Polyarylether-etherketone und/oder Polyamide und/oder Epoxyharze und/oder Polytetrafluorethylen und/oder fluorhältige Harze, wie z.B. Polyflouralkoxy-Polytetrafluorethylen-Copolymere, Ethylen-tetrafluorethylen, fluorierte Ethylen-Propylen Copolymere, Polyvinylidendifluorid, Polyvinylfluorid, Allylensulfid und/oder Poly-triazo-Pyromellithimid und/oder Polyesterimid und/oder Polyvinylensulfid und/oder Polysulfone und/oder Polyarylsulfone und/oder Polyaryloxide mit Polyimiden und/oder Polyamidimiden und/oder Polyaryletherimiden und/oder Phenolharzen und/oder oder Polyarylether-etherketonen und/oder Polyamiden und/oder Epoxyharzen und/oder Polytetrafluorethylen und/oder fluorhältigen Harzen, wie z.B. Polyflouralkoxy-Polytetrafluorethylen-Copolymeren, Ethylen-tetrafluorethylen, fluorierte Ethylen-Propylen Copolymere, Polyvinylidendifluoride, Polyvinylfluoride und/oder Allylensulfide und/oder Poly-triazo-Pyromellithimide und/oder Polyesterimide und/oder Polyarylsulfide und/oder Polyvinylensulfide und/oder Polyarylsulfone und/oder Polyaryloxide.

Von Vorteil ist dabei, dass durch die hauptsächlich aus dem thermoplastischen Harz bzw. Harzmischungen oder Copolymeren bestehende Gleitlackschicht ein zyklischer temperaturabhängiger Erweichungs- und Verfestigungsmechanismus ermöglicht wird, wodurch die Lebensdauer der Gleitlackschicht erhöht werden kann. Es ist weiters von Vorteil, dass durch die speziell angeführten Harze bzw. Harzmischungen bzw. Copolymere eine Anpassung der Lagerfunktion an unterschiedliche Belastungsfälle möglich ist, sodass also beispielsweise teurere Harztypen nur für hoch belastbare Lagerelemente eingesetzt werden und in der Folge für weniger belastete Lagerelemente also ein Kostenvorteil erreicht werden kann.

Der Harzanteil am Gleitlack kann ausgewählt sein aus einem Bereich mit einer unteren Grenze von 30 % und einer oberen Grenze von 95 %. Es wird damit eine Variation der Übertragbarkeit der Verformung auf den Untergrund ermöglicht, sodass die Anpassfähigkeit der Gleitlackschicht, insbesondere in der Einlaufphase, besser an die jeweiligen Erfordernisse angepasst werden kann.

Zur weiteren Verbesserung dieses Effektes ist es nach Weiterbildungen der Erfindung möglich, den Harzanteil der Gleitlackschicht auszuwählen aus einem Bereich mit einer unteren Grenze von 50 Gew.-% und einer oberen Grenze von 85 Gew.-% bzw. aus einem Bereich mit einer unteren Grenze von 70 Gew.-% und einer oberen Grenze von 75 Gew.-%.

Das thermoplastische Harz kann zumindest einen Zusatzstoff enthalten, ausgewählt aus einer Gruppe umfassend Gleitmittel, insbesondere MoS₂, h-BN, WS₂, Graphit, Polytetrafluorethylen, Pb, Pb-Sn-Legierungen, CF₂, PbF₂, weiters Hartstoffe, wie z.B. CrO₃, Fe₃O₄, PbO, ZnO, CdO, Al₂O₃, SiC, Si₃N₄, SiO₂, Si₃N₄, weiters Ton, Talk, TiO₂, Mullit, CaC₂, Zn, AlN, Fe₃P, Fe₂B, Ni₂B, FeB, Metallsulfide, wie z.B. ZnS, Ag₂S, CuS, FeS, FeS₂, Sb₂S₃, PbS, Bi₂S₃, CdS, Fasern, insbesondere anorganische, wie z.B. Glas, Kohlenstoff, Kaliumtitanat, Whisker, beispielsweise SiC, Metallfasern, beispielsweise aus Cu oder Stahl, sowie Mischungen daraus, wie z.B. zumindest ein Gleitmittel, insbesondere der genannten Art, und/oder zumindest ein Hartstoff, insbesondere der genannten Art, und/oder zumindest ein Metallsulfid, insbesondere der genannten Art, und/oder zumindest ein faserförmiger Zusatzstoff, insbesondere der genannten Art, mit zumindest einem Gleitmittel und/oder einem Hartstoff und/oder einem Metallsulfid und/oder zumindest einem faserförmigen Zusatzstoff, sämtliche insbesondere der genannten Art.

Es kann hiermit u.a. die Topografie der Gleitlackschicht, also beispielsweise die Oberflächenrauheit, beeinflusst werden und letztendlich ist es damit möglich, das Verhalten des Gleitlackes in Hinblick auf die Reibung zu beeinflussen. Insbesondere kann mit dem zumindest einem Gleitmittel dem Gleitlack eine höhere Gleitfähigkeit verliehen werden bzw. mit dem zumindest einen Hartstoff bzw. dem zumindest einem faserförmigen Zusatzstoff die Härte des Gleitlackes variiert werden, insbesondere kann damit auch die Verschleißfestigkeit der Gleitlackschicht und/oder der Reibwert der Gleitlackschicht beeinflusst bzw. verbessert werden.

Von Vorteil ist es, wenn die Gleitlackschicht zumindest einen Zusatzstoff enthält, der einen plättchenförmigen Habitus aufweist, da damit die Anisotopie der Eigenschaften des Gleitlackes - und damit in der Folge die Einebnungseigenschaften des Gleitlackes - verbessert werden können, sodass der Anteil der Grenzreibung im Vergleich zum Mischreibung deutlich in den Hintergrund gerückt wird.

Der Zusatzstoff ist bevorzugt in einem Anteil zugesetzt, ausgewählt aus einem Bereich mit einer unteren Grenze von 5 % und einer oberen Grenze von 30 % bzw. können diese Grenzen auch für Mischungen aus unterschiedlichen Zusatzstoffen herangezogen werden, um oben genannte Effekte weiter zu verstärken.

Dabei ist es von Vorteil, wenn der Zusatzstoff in einem Anteil zugesetzt ist, ausgewählt aus einem Bereich mit einer unteren Grenze von 10 % und einer oberen Grenze von 25 % bzw. gemäß einer weiteren Ausführungsvariante hierzu in einem Anteil ausgewählt aus einem Bereich mit einer unteren Grenze von 15 % und einer oberen Grenze von 20 %, wodurch ebenso eine weitere Verbesserung obiger Effekte erzielt werden kann.

Der zumindest eine Zusatzstoff hat bevorzugt eine Partikelgröße ausgewählt aus einem Bereich mit einer unteren Grenze von 0,5 µm und einer oberen Grenze von 20 µm. Es wird in diesem angegebenen Bereich der Partikelgröße ein ausgewogenes Verhältnis zwischen Spitzenabbau, also Einebnung der Gleitlackschicht bzw. der Oberfläche eines zu lagernden Elementes, beispielsweise einer Welle, und verminderter Reibung bei Ausbildung des Zusatzstoffes als Gleitmittel erreicht.

Zur weiteren Verbesserung dieser Effekte ist es von Vorteil, wenn der zumindest eine Zusatzstoff eine Partikelgröße aufweist, ausgewählt aus einem Bereich mit einer unteren Grenze von 2 µm und einer oberen Grenze von 10 µm bzw. nach einer weiteren Ausführungsvariante aus einem Bereich mit einer unteren Grenze von 3 µm und einer oberen Grenze von 5 µm.

Besonders vorteilhaft ist es, wenn der zumindest eine Zusatzstoff durch Molybdändisulfidpartikel gebildet ist mit einer mittleren Länge, ausgewählt aus einem Bereich mit einer unteren Grenze von 10 µm und einer oberen Grenze von 40 µm und/oder einer mittleren Breite ausgewählt aus einem Bereich mit einer unteren Grenze von 10 µm und einer oberen Grenze von 40 µm und/oder einer mittleren Höhe ausgewählt aus einem Bereich mit einer unteren Grenze von 2 nm und einer oberen Grenze von 20 nm, die Molybdändisulfidpartikel also insbesondere wiederum im wesentlichen plättchenförmigen Habitus aufweisen, wodurch erreicht wird, dass sich diese MoS₂-Plättchen zumindest teilweise senkrecht zur Laufrichtung aufrichten und damit nachfolgende Partikel mehr oder weniger "auflaufen" lassen, sodass dadurch eine Verminderung des Verschleißes erreicht werden kann.

Zur weiteren Verbesserung dieses Effektes ist es von Vorteil, wenn das Molybdändisulfid nach Ausführungsvarianten eine Partikelgröße aufweist mit einer Länge, ausgewählt aus einem Bereich mit einer unteren Grenze von 15 µm und einer oberen Grenze von 35 µm und/oder einer mittleren Breite, ausgewählt aus einem Bereich mit einer unteren Grenze von 15 µm und einer oberen Grenze von 35 µm und/oder einer mittleren Höhe, ausgewählt aus einem Bereich mit einer unteren Grenze von 5 nm und einer oberen Grenze von 15 nm bzw. mit einer mittleren Länge der Partikel, ausgewählt aus einem Bereich mit einer unteren Grenze von 18 µm und einer oberen Grenze von 25 µm und/oder eine mittleren Breite, ausgewählt aus einem Bereich mit einer unteren Grenze von 18 µm und einer oberen Grenze von 25 µm und/oder einer mittleren Höhe, ausgewählt aus einem Bereich mit einer unteren Grenze von 5 nm und einer oberen Grenze von 8 nm.

Um das selbstschmierende Verhalten der Gleitlackschicht über weite Grenzen variieren zu können, ist es möglich, dass zumindest ein Zusatzstoff durch Graphit gebildet ist, insbesondere mit einer Korngröße ausgewählt aus einem Bereich mit einer unteren Grenze von 2 µm und einer oberen Grenze von 8 µm.

Die Gleitlackschicht kann eine Schichtdicke aufweisen, ausgewählt aus einem Bereich mit einer unteren Grenze von 2 µm und einer oberen Grenze von 40 µm bzw. nach einer Weiterbildung mit einer unteren Grenze von 5 µm und einer oberen Grenze von 20 µm bzw. nach einer weiteren Ausführungsvariante mit einer unteren Grenze von 10 µm und einer oberen Grenze von 15 µm, wodurch das Lagerelement wiederum an den jeweiligen Anwendungsfall, wie z.B. Großlager oder Kleinlager, angepasst werden kann und damit bei langfristig zuverlässig sichergestellten, gleichbleibenden Eigenschaften des Lagerelementes eine entsprechende Kostenoptimierung erzielbar ist.

Besonders vorteilhaft ist es, wenn der Gleitlack durch ein Polyimidharz, insbesondere ein Polyamidimidharz, gebildet ist, welches Molybdändisulfid und Graphit enthält, wobei der Anteil des Polyimidharzes in Lösungsmittel ausgewählt ist aus einem Bereich mit einer unteren Grenze von 60 % und einer oberen Grenze von 80 %, der Anteil an MoS₂ ausgewählt aus einem Bereich mit einer unteren Grenze von 15 % und einer oberen Grenze von 25 % und der Anteil an Graphit ausgewählt ist aus einem Bereich mit einer unteren Grenze von 5 % und einer oberen Grenze von 15 %, da durch diese Zusammensetzung überraschenderweise, trotz des hohen Anteils an MoS₂ und Graphit in Polyimidharz, eine nicht zu erwartende Verbesserung der Verschleißfestigkeit des Lagerelementes ermöglicht wird. Nicht zu erwarten deshalb, da mit abnehemendem Polyimidharzanteil, das u.a. als Bindemittel für die reibungsvermindernden Zusätze angesehen werden kann, zu erwarten wäre, dass der Zusammenhalt der Schicht verschlechtert wird, dass diese letztendlich "zerbröselt". Durch den gewählten Anteil an MoS₂ und Graphit, insbesondere das Verhältnis des Anteils von MoS₂ zu Graphit, tritt dies nicht auf, wobei die Anmelderin zum gegenständlichen Zeitpunkt hierfür keine erklärende Theorie hat. Es wird jedoch eine Interaktion zwischen den MoS₂- und Graphitteilchen vermutet.

Es kann damit auch eine Verbesserung des Kavitationsverhaltens erreicht werden und darüber hinaus auch eine verminderte Korrosionsanfälligkeit des Lagerelementes festgestellt werden.

Zur weiteren Verbesserung dieser Eigenschaften ist es möglich, dass der Anteil des Polyimidharzes in Lösungsmittel ausgewählt ist aus einem Bereich mit einer unteren Grenze von 65 % und einer oberen Grenze von 75 % bzw. einer unteren Grenze von 67, 5 % und einer oberen Grenze von 72, 5 %, bzw. der Anteil des Polyimidharzes in Lösungsmittel insbesondere 70 % beträgt, dass weiters der Anteil von MoS₂ ausgewählt ist aus einem Bereich mit einer unteren Grenze von 17 % und einer oberen Grenze von 22 % bzw. einer unteren Grenze von 18,5 % und einer oberen Grenze von 21, 5 % bzw. 20 % beträgt bzw. weiters der Anteil an Graphit ausgewählt ist aus einem Bereich mit einer unteren Grenze von 7 % und einer oberen Grenze von 13 % bzw. aus einem Bereich mit einer unteren Grenze von 8,5 % und einer oberen Grenze von 11,5 % bzw. 10 % beträgt.

Es ist insbesondere von Vorteil, wenn das Verhältnis von MoS₂ zu Graphit ausgewählt ist aus einem Bereich mit einer unteren Grenze von 1,5 : 1 und einer oberen Grenze von 4,5 : 1, um damit wiederum das Verhalten der Gleitlackschicht über weitere Grenzen variieren zu können und somit auch die Einlaufeigenschaften zu verbessern.

Die Gleitschicht kann mit einer Schichtdicke ausgebildet sein, ausgewählt aus einem Bereich mit einer unteren Grenze von 10 µm und einer oberen Grenze von 30 µm bzw. einer unteren Grenze von 12 µm und einer oberen Grenze von 20 µm oder mit einer unteren Grenze von 15 µm und einer oberen Grenze von 17 µm. Insbesondere ist es von Vorteil, wenn das Verhältnis der Schichtdicke der Gleitschicht zur Schichtdicke der Gleitlackschicht ausgewählt ist aus einem Bereich mit einer unteren Grenze von 2 : 1 und einer oberen Grenze von 5:1. Durch dieses Schichtdickenverhältnis bzw. die angegebenen Schichtdickenbereiche wird der Effekt, dass die Einlaufschicht nicht nur örtlich abgetragen sondern durch dynamische Belastungen auch der Untergrund verformt wird und somit beide Schichten an der Anpassung während der Einlaufphase mitwirken, verbessert. Darüber hinaus wird durch die gewählte Schichtdicke der Gleitschicht die Dauerstandsfestigkeit des Lagerelementes verbessert.

Gemäß einer Ausführungsvariante hierzu kann das Verhältnis der Schichtdicke der Gleitschicht zur Schichtdicke der Gleitlackschicht zumindest annähernd 3 : 1 betragen.

Es kann auch vorgesehen sein, dass das Verhältnis der Schichtdicke der Lagermetallschicht zur Schichtdicke der Gleitschicht ausgewählt ist aus einem Bereich mit einer unteren Grenze von 7 : 1 und einer oberen Grenze von 15:1 bzw. kann dieses Verhältnis zumindest annähernd 10 : 1 betragen, wobei die Lagermetallschicht keine Laufeigenschaften aufweisen muss, sondern ausschließlich neben der Stützschicht zur mechanischen Festigkeit des Lagerelementes beitragen kann. Gegebenenfalls kann natürlich diese Lagermetallschicht Notlaufeigenschaften aufweisen.

Schließlich ist es auch von Vorteil, wenn das Verhältnis der Schichtdicke der Stützschicht der Lagermetallschicht ausgewählt ist aus einem Bereich mit einer Untergrenze von 7 : 1 und einer oberen Grenze von 15 : 1 bzw. wenn das Verhältnis der Schichtdicke der Stützschicht zur Schichtdicke der Lagermetallschicht zumindest annähernd 10 : 1 beträgt, wodurch sich ein ausgewogenes Verhältnis einerseits zwischen den in der Herstellung des Lagerelementes entstehenden Kosten zur mechanischen Festigkeit des Lagerelementes erreichen lässt.

Besonders vorteilhaft ist es wenn für die einzelnen Schichten zumindest bis auf Verunreinigungen bleifreie Werkstoffe verwendet werden, also das Lagerelement im Wesentlichen bleifrei ist, weil damit die Umweltbelastung reduziert werden kann.

Das Lagerelement kann insbesondere als Gleitlagerhalbschale, Lagerbuchse oder Anlaufring ausgebildet sein.

Zum besseren Verständnis der Erfindung wird diese anhand der nachfolgenden. Figur näher erläutert. Es zeigt dabei in stark schematisch vereinfachter Darstellung:

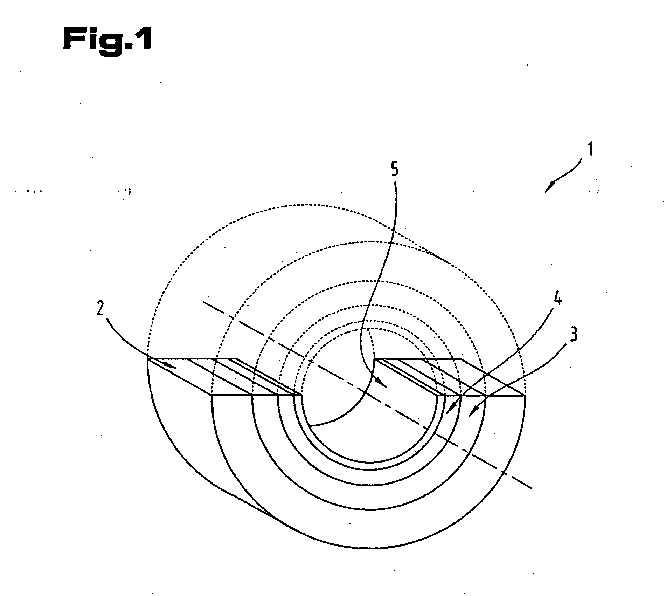

- Fig. 1: ein erfindungsgemäßes Lagerelement in Form einer Gleitlagerhalbschale.

Einführend sei festgehalten, dass in der Beschreibung gewählte Lageangaben, wie z.B. oben, unten, seitlich usw. auf die unmittelbar beschriebene sowie dargestellte Figur bezogen und bei einer Lageänderung sinngemäß auf die neue Lage zu übertragen sind. Weiters können auch Einzelmerkmale oder Merkmalskombinationen aus den beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereiche beginnen mit einer unteren Grenze von 1 oder größer und enden bei einer oberen Grenze von 10 oder kleiner, z.B. 1 bis 1,7, oder 3,2 bis 8,1 oder 5,5 bis 10.

Die Ausführungsbeispiele zeigen mögliche Ausführungsvarianten des Lagerelementes, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Fig. 1 zeigt ein erfindungsgemäßes Lagerelement 1 umfassend eine Stützschicht 2, einer Lagermetallschicht 3, einer Gleitschicht 4 sowie einer über dieser erfindungsgemäß angeordneten Gleitlackschicht 5.

Die Stützschicht 2 wird üblicherweise durch Stahl gebildet, kann aber selbstverständlich auch aus vergleichbaren Werkstoffen bestehen, mit welchen die selben bzw. ähnliche Funktionen, nämlich die Bereitstellung der mechanischen Festigkeit des Lagerelementes 1 realisiert werden kann. Die mechanische Festigkeit des gesamten Lagerelementes 1 ist dabei abhängig vom jeweiligen Einsatzgebiet, sodass beispielsweise auch Kupferlegierungen, wie z.B. Messing, Bronze, Verwendung finden können. Zudem wird dem Lagerelement 1 durch die Stützschicht 2 die Formstabilität verliehen.

Die über dieser Stützschicht 2 angeordnete Lagermetallschicht 3 ist durch eine Lagermetalllegierung gebildet. Diese kann z.B. aus einer Legierung auf Aluminiumbasis, d.h. mit einer Aluminiummatrix, bestehen, in der zumindest eine Weichphase und/oder zumindest ein partikelförmiger Hartstoff eingelagert sein können.

Die zumindest eine Weichphase kann durch zumindest ein Element aus einer ersten Gruppe umfassend Zinn, Antimon, Indium und Wismut gebildet sein. Gegebenenfalls ist es möglich, dass die Lagermetallschicht 3 auch Blei enthält, wobei vorzugsweise bleifreie Legierungen hierfür verwendet werden.

Die Hartpartikel können z.B. aus zumindest einem Element aus einer Elementgruppe umfassend Kupfer, Mangan, Zink, Kobalt, Chrom, Silizium, Magnesium und Eisen bzw. durch die Elemente Scandium und/oder Zirkonium gebildet sein. Ebenfalls ist es möglich, dass diese Hartpartikel durch intermetallische Phasen, welche beispielsweise zwischen den letztgenannten Elementen oder den Elementen mit Aluminium gebildet werden, aufgebaut sein. Ebenso ist es möglich, dass zumindest ein Anteil dieser Hartpartikel durch Fasern gebildet wird.

Selbstverständlich können aber auch jegliche andere, aus dem Stand der Technik bekannte Weichphasen und/oder Hartpartikel in der Lagermetalllegierung der Lagermetallschicht 3 enthalten sein.

Mit Hilfe der Weichphase ist es bekanntlich möglich, dem Lagerelement 1 Notlaufeigenschaften zu verleihen, wenn in der darüber angeordneten Gleitschicht 4 bzw. Gleitlackschicht 5 infolge des Betriebes des Lagerelementes 1 Fehlstellen entstehen und somit die Lagermetallschicht 3 zumindest annähernd direkt mit einem zu lagernden Bauteil, wie z.B. einer Welle, in Kontakt kommt. Es wird damit dem Lagerelement 1 gegebenenfalls auch eine Einbettfähigkeit für aus dem Abrieb in Folge der Verwendung des Lagerelementes 1 stammende Festpartikel verliehen. Die Hartpartikel verleihen der Aluminiumlegierung die erforderliche mechanische Festigkeit.

Als Lagermetallschicht 3 eignen sich insbesondere Legierungen auf Zinn-, Wismuth-, Indium-, Blei- oder Aluminiumbasis sowie Legierungen auf gegebenenfalls hochbleihältiger, CuPb- oder auf AlSn- bzw. auf AlBi-Basis. Insbesondere sind hochzinnhältige Zinnbasislegierungen von Vorteil. Auch bleifreie Kupferbasislegierungen sind verwendbar.

Einsetzbare Lagermetalle auf Kupferbasis sind beispielsweise CuPb22Sn2, CuPb10 Sn10, CuPb15Sn7, CuSn6, CuSn4Zn. Insbesondere bleifreie Kupferlegierungen auf CuAl-, CuSn-, CuZn-, CuZnSn- sowie CuBi-Basis sind im Hinblick auf die geringere Umweltbelastung von Vorteil.

Einsetzbare Lagermetalle auf Zinnbasis sind beispielsweise Sn8Cu4, SnSbl2, Cu₆Pb.

Einsetzbare Lagermetalle auf Bleibasis sind beispielsweise PbSb10Sn6, PbSb15Sn10, PbSb15SnAs.

Lagermetalle auf Aluminiumbasis können z.B. AlSn40, AlSn20, AlSn25, AlSn10, AlSn6, etc. bilden.

Es ist weiters möglich Lagermetalle auf AlZn-Basis, wie z.B. AlZn4SiPb, oder AlSi-Basis, wie z.B. AlSi11CuMgNi, oder AlSnSi-Basis, wie z.B. AlSn20Si4, zu verwenden.

Die Lagermetallschicht 3 kann auf die Stützschicht 2 z.B. galvanisch, durch Plattieren, etc., wie dies aus dem Stand der Technik bekannt ist, aufgebracht werden.

Auf diesem zwei oder mehrschichtigen Aufbau wird in der Folge mit Hilfe eines Sputterverfahrens, beispielsweise aus einer Aluminiumlegierung, die Gleitschicht 4 aufgedampft. Selbstverständlich können aber auch andere aus dem Stand der Technik bekannte Legierungen bzw. Metalle, wie sie in Sputterverfahren für diesen Verwendungszweck üblicherweise verarbeitet werden, beispielsweise Aluminiumbasislegierung mit Blei und/oder Wismut und/oder Indium und/oder Zinn als Legierungselemente, Kupferbasis, Silberbasislegierungen mit Blei und/oder Wismut und/oder Indium und/oder Zinn, Silber-Blei-Legierung oder dgl., aufgedampft werden. Die Aufzählung der möglichen zu verwendenden Legierungen ist nicht erschöpfend und können selbstverständlich auch andere als die genannten Legierungen bzw. Gemische verarbeitet werden, wobei insbesondere wiederum vorzugsweise bleifreie Legierungen verwendet werden.

Da Sputterverfahren an sich bekannt sind, sei an dieser Stelle an die einschlägige Literatur verwiesen.

Derartige Legierung können Aluminium im Bereich zwischen 50 Gew.-% bis 90 Gew.-%, beispielsweise im Bereich zwischen 55 Gew.-% und 80 Gew.-%, vorzugsweise im Bereich zwischen 60 Gew.-% und 79 Gew.-%, insbesondere im Bereich zwischen 64 Gew.-% und 70 Gew.-%, sowie Zinn im Bereich zwischen 5 Gew.-% und 45 Gew.-%, beispielsweise im Bereich zwischen 10 Gew.-% und 39 Gew.-%, vorzugsweise im Bereich zwischen 12 Gew.-% und 32 Gew.-%, insbesondere im Bereich zwischen 17 Gew.-% und 20 Gew.-%, enthalten. Andere Legierungselemente, wie z.B. Mangan, Eisen, Kobalt oder dgl. können selbstverständlich zur Bildung bestimmter Legierungsphasen, z.B. Hartstoffe, enthalten sein.

Weitere Legierungselemente wären z.B. Ag, Al, Fe, Cu, Ni, Sc, Si, Zn, Mn, Co, Cr, Zr, Mg.

Derartige Gleitlager mit dem Aufbau Stützschicht 2, Lagermetallschicht 3 und Gleitschicht 4 sind bereits Stand der Technik, und sei hierzu auf die einschlägige Literatur verwiese, um an dieser Stelle unnötige Wiederholungen zu vermeiden. Es sei nur so viel angemerkt, dass sich die Zusammensetzung der Lagermetallschicht 3 von jener der Gleitschicht 4 unterscheidet.

Erfindungsgemäß ist über der Gleitschicht 4 die Gleitlackschicht 5 angeordnet. Diese kann z.B. durch Streichen, Sprühen oder dgl. aufgetragen werden.

Bevorzugt sind die einzelnen Schichten des Lagerelementes 1 direkt aufeinander angeordnet, also die Lagermetallschicht 3 direkt auf der Stützschicht 2 und/oder die Gleitschicht 4 direkt auf der Lagermetallschicht 3 und/oder der Gleitlackschicht 5 direkt auf der Gleitschicht 4. Es ist selbstverständlich möglich im Rahmen der Erfindung, beispielsweise wenn die Haftfestigkeit einzelner Schichten nicht ausreichend ist, zwischen diesen, also beispielsweise zwischen der Stützschicht 2 und der Lagermetallschicht 3 und/oder der Lagermetallschicht 3 und der Gleitschicht 4 und/oder der Gleitschicht 4 und der Gleitlackschicht 5 eine weitere Funktionsschicht anzuordnen, beispielsweise in Form einer Bindeschicht, z.B. aus einem Reinmetall wie Aluminium oder einer Legierung, wie z.B. AlZn4,5, oder aber auch in Form einer Sperrschicht, z.B. eines Nickeldammes, um beispielsweise das Diffundieren einzelner Legierungsbestandteile zwischen einzelnen Schichten zu verhindern. Auch diese Schichten sind bereits Stand der Technik, sodass sich eine weitere. Erörterung an dieser Stelle erübrigt.

Die Gleitlackschicht 5 besteht bevorzugt überwiegend aus einem thermoplastischen Harz, wie dies bereits vorab dargelegt wurde. Beispielsweise kann als thermoplastisches Harz ein Polyamidimidharz verwendet werden oder auch zumindest eines der voranstehenden thermoplastischen Harze. Das Harz kann in zumindest einem Lösungsmittel vorliegen, insbesondere einem organischen Lösungsmittel, wie z.B. Xylol, wodurch die Verarbeitbarkeit erleichtert werden kann. Der Lösungsmittelanteil kann dabei ausgewählt sein aus einem Bereich mit einer unteren Grenze von 40 Gew.-% und einer oberen Grenze von 80 Gew.-%, insbesondere mit einer unteren Grenze von 50 Gew.-% und einer oberen Grenze von 70 Gew.-%, vorzugsweise mit einer unteren Grenze von 60 Gew.-% und einer oberen Grenze von 65 Gew.-%, bezogen auf den Harzanteil, d.h. Harz mit Lösungsmittel. Es kann somit der trockene Harzanteil, insbesondere des Polyamidimidharzes, ausgewählt sein aus einem Bereich mit einer unteren Grenze von 20 Gew.-% und einer oberen Grenze von 50 Gew.-%, insbesondere einer unteren Grenze von 30 Gew.-% und einer oberen Grenze von 40 Gew.-%, vorzugsweise einer unteren Grenze von 35 Gew.-% und einer oberen Grenze von 37,5 Gew.-%. Bezogen hierauf kann eine erfindungsgemäß aufgebrachte Gleitlackschicht 5 beispielsweise eine trockene Zusammensetzung von 35 Gew.-% Polyamidimidharz, 45 Gew.-% MoS₂ und 20 Gew.-% Graphit aufweisen bzw. eine trockene Zusammensetzung die sich aus den angegebenen Wertebereichen für die einzelnen Inhaltstoffe der Gleitlackschicht 5 errechnet.

Besonders bevorzugt weist diese Gleitlackschicht zumindest einen weiteren Zusatzstoff in Form eines Gleitmittels und/oder Hartstoffes auf. Beispielsweise ist es möglich, dem Polyamidimidharz Molybdändisulfid und/oder Graphit insbesondere in den angegebenen Mengenbereichen zuzumischen, um damit die Schmierfähigkeit zu erhöhen.

Um auch hierbei wiederum unnötige Wiederholungen zu vermeiden sei hinsichtlich der Zusammensetzung der Gleitlackschicht 5 bzw. des thermoplastischen Harzes für die Gleitlackschicht 5 auf obige Ausführungen verwiesen.

Das erfindungsgemäße Lagerelement 1, welches beispielsweise wie in Fig. 1 dargestellt als Gleitlagerhalbschale ausgebildet sein kann, ebenso - wie dies in Fig. 1 strichliert angedeutet ist - als Volllager oder als Anlaufring bzw. Lagerbuchse bzw. generell als Radial- oder Axiallager ausgebildet sein kann, wird überwiegend im Mischreibungsgebiet (entsprechend Stribeck-Kurve) betrieben. Sollten dabei beispielsweise an der Oberfläche des Weiteren zu lagernden Elementes, also beispielsweise einer Welle, Kanten oder dgl. auftreten, so kann dies zu einer Verlagerung in das sogenannte Grenzreibungsgebiet führen. Mit Hilfe des erfindungsgemäßen Lagerelementes 1, d.h. dessen Gleitlackschicht 5, ist es nunmehr möglich, insbesondere wenn diese Gleitlackschicht 5 anisotrope mechanische Eigenschaften aufweist, die Reibung wieder in das günstigere Mischreibungsgebiet zu verschieben. Besonders bevorzugt wird hierbei unter anderem MoS₂ mit plättchenförmigem Habitus verwendet, da diese MoS₂-Teilchen keinerlei Affinität zueinander aufweisen, im Gegensatz zu in herkömmlichen Gleitelementen bzw. Lagerelementen mit Gleitschichten mit Weichmetallen, wie z.B. Zinn, bei denen die Weichmetallteilchen die Eigenschaft aufweisen, durch den Spitzenabbau an einer Stelle entfernt zu werden und an einer anderen Stelle der Gleitschicht durch die Affinität der Weichphasenteilchen zueinander sich bevorzugt anhäufen, sodass eine Art Lawineneffekt mit Verringerung des Schmierspaltes damit einhergeht. Aus diesem Grund wird erfindungsgemäß bevorzugt ein Gleitlack verwendet, welcher Gleitmittel, also beispielsweise MoS₂, enthält, die diese Affinität nicht zeigen.

Darüber hinaus wird bevorzugt ein plättchenförrniges Gleitmittel aus eingangs erwähnten Gründen verwendet. Es sei jedoch darauf hingewiesen, dass dies nicht zwingend erforderlich ist, da die Aufgabe der Erfindung auch mit einem anderen Gleitlack gelöst wird, wenngleich die Verwendung von plättchenförmigen, zueinander nicht affinen Gleitmittelpartikeln verbesserte Eigenschaften des Lagerelementes 1 bewirken.

Die durch Abrasion bzw. Erosion abgleitenden Partikel der Gleitlackschicht 5, welche auch als Einlaufschicht dient, binden sich also nicht mehr an den Untergrund an, es findet also keine Verschleppung dieser Teilchen statt, womit ein zumindest annähernd gleichbleibender Schmierspalt über die Lebensdauer des Lagerelementes 1 erreicht werden kann.

Es ist weiters möglich, dass die Gleitlackschicht 5 eine Härte nach Vickers aufweist, ausgewählt aus einem Bereich mit einer unteren Grenze von 20 HV und einer oberen Grenze von 45 HV bzw. mit einer unteren Grenze von 22 HV und einer oberen Grenze von 35 HV, insbesondere mit einer unteren Grenze von 15 HV und einer oberen Grenze von 30 HV. Es wird damit der Gleitlackschicht 5 eine entsprechende Festigkeit bei gleichzeitiger Schmierfähigkeit verliehen.

Die Gleitschicht 4 weist bevorzugt eine Härte nach Vickers auf, ausgewählt aus einem Bereich mit einer unteren Grenze von 60 HV, insbesondere 90 HV, und einer oberen Grenze von 200 HV, insbesondere 130 HV.

Die Oberfläche der Gleitlackschicht 5 weist einen arithmetischen Mittenrauwert Ra nach DIN EN ISO 4287 aufweist, ausgewählt aus einem Bereich mit einer unteren Grenze von 0,02 µm und einer oberen Grenze von 1,5 µm bzw. einer unteren Grenze von 0,5 µm und einer oberen Grenze von 1 µm, insbesondere mit einer unteren Grenze von 0,8 µm und einer oberen Grenze von 0,9 µm. Des weiteren kann diese Oberfläche des Gleitlackes bzw. der Gleitlackschicht 5 eine maximale Rauheitsprofilhöhe Rz nach DIN EN ISO 4287 aufweisen, ausgewählt aus einem Bereich mit einer unteren Grenze von 0,5 µm und einer oberen Grenze von 10 µm bzw. einer unteren Grenze von 3 µm und einer oberen Grenze von 8 µm, insbesondere einer unteren Grenze von 5 µm und einer oberen Grenze von 6 µm. Durch diese Topografie der Gleitlackschicht 5 wird eine sehr gleichmäßige Ausbildung eines Schmierspaltes bzw. Ölspaltes erreicht.

Der Ordnung halber sei abschließend darauf hingewiesen, dass zum besseren Verständnis des Aufbaus des Lagerelementes 1 dieses bzw. dessen Bestandteile teilweise unmaßstäblich und/oder vergrößert und/oder verkleinert dargestellt wurden.

### Bezugszeichenaufstellung

- 1: Lagerelement
- 2: Stützschicht
- 3: Lagermetallschicht
- 4: Gleitschicht
- 5: Gleitlackschicht

## Patentansprüche

1. Lagerelement (1) umfassend eine Stützschicht (2), eine über der Stützschicht (2) angeordnete Lagermetallschicht (3) und eine über der Lagermetallschicht (3) angeordnete, aufgesputterte Gleitschicht (4) auf der eine Gleitlackschicht (5) angeordnet ist, **dadurch gekennzeichnet, dass** die Oberfläche der Gleitlackschicht (5) einen arithmetischen Mittenrauwert Ra nach DIN EN ISO 4287 aufweist, ausgewählt aus einem Bereich mit einer unteren Grenze von 0,02 µm und einer oberen Grenze von 1,5 µm.

2. Lagerelement (1) nach Anspruch 1, **dadurch gekennzeichnet, dass** die Gleitlackschicht (5) anisotrope mechanische Eigenschaften aufweist.

3. Lagerelement (1) nach Anspruch 1 oder 2, **dadurch gekennzeichnet, dass** die Gleitlackschicht (5) als Hauptbestandteil zumindest ein thermoplastisches Harz enthält.

4. Lagerelement (1) nach Anspruch 3, **dadurch gekennzeichnet, dass** das zumindest eine thermoplastische Harz ausgewählt ist aus einer Gruppe umfassend Polyimide, insbesondere aromatische, Polyamidimide, insbesondere aromatische, Polyaryletherimide, gegebenenfalls modifiziert mit Isocyanaten, Phenolharze, Polyarylether-etherketone, Polyamide, insbesondere aromatische, Epoxyharze, Polytetrafluorethylen, fluorhältige Harze, wie z.B. Polyflouralkoxy-Polytetrafluorethylen-Copolymere, Ethylen-tetrafluorethylen, fluorierte Ethylen-Propylen Copolymere, Polyvinylidendifluorid, Polyvinylfluorid, Allylensulfid, Poly-triazo-Pyromellithimide, Polyesterimide, Polyarylsulfide, Polyvinylensulfide, Polysulfon, Polyarylsulfone, Polyaryloxide, Mischungen und Copolymere daraus.

5. Lagerelement (1) nach Anspruch 3 oder 4, **dadurch gekennzeichnet, dass** ein Harzanteil am Gleitlack ausgewählt ist aus einem Bereich mit einer unteren Grenze von 30 Gew.-% und einer oberen Grenze von 95 Gew.-%.

6. Lagerelement (1) nach einem der Ansprüche 3 bis 5, **dadurch gekennzeichnet, dass** das thermoplastische Harz zumindest einen Zusatzstoff enthält, ausgewählt aus einer Gruppe umfassend Gleitmittel, wie z.B. MoS₂, h-BN, WS₂, Graphit, Polytetrafluorethylen, Pb, Pb-Sn-Legierungen, CF₂, PbF₂, Hartstoffe, wie z.B. CrO₃, Fe₃O₄, PbO, ZnO, CdO, Al₂O₃, SiC, Si₃N₄, SiO₂,Si₃N₄, Ton, Talk, TiO₂, Mullit, CaC₂, Zn, AlN, Fe₃P, Fe₂B, Ni₂B, FeB, Metallsulfide, wie z.B. ZnS, Ag₂S, CuS, FeS, FeS₂, Sb₂S₃, PbS, Bi₂S₃, CdS, Fasern, insbesondere anorganische, wie z.B. Glas, Kohlenstoff, Kaliumtitanat, Whisker, beispielsweise SiC, Metallfasern, beispielsweise aus Cu oder Stahl, sowie Mischungen daraus.

7. Lagerelement (1) nach einem der vorhergehenden Ansprüche, **dadurch gekennzeichnet, dass** die Gleitlackschicht (5) zumindest einen Zusatzstoff enthält, der einen plättchenförmigen Habitus aufweist.

8. Lagerelement (1) nach Anspruch 6 oder 7, **dadurch gekennzeichnet, dass** der Zusatzstoff in einem Anteil zugesetzt ist, ausgewählt aus einem Bereich mit einer unteren Grenze von 5 % und einer oberen Grenze von 30 %.

9. Lagerelement (1) nach einem der Ansprüche 6 bis 8, **dadurch gekennzeichnet, dass** der zumindest eine Zusatzstoff eine Partikelgröße aufweist, ausgewählt aus einem Bereich mit einer unteren Grenze von 0,5 µm und einer oberen Grenze von 20 µm.

10. Lagerelement (1) nach einem der Ansprüche 6 bis 9, **dadurch gekennzeichnet, dass** zumindest ein Zusatzstoff durch Molybdändisulfid gebildet ist mit einer mittleren Länge der Partikel ausgewählt aus einem Bereich mit einer unteren Grenze von 10 µm und einer oberen Grenze von 40 µm und/oder einer mittleren Breite ausgewählt aus einem Bereich mit einer unteren Grenze von 10 µm und einer oberen Grenze von 40 µm und/ oder einer mittleren Höhe ausgewählt aus einem Bereich mit einer unteren Grenze von 2 nm und einer oberen Grenze von 20 nm.

11. Lagerelement (1) nach einem der vorhergehenden Ansprüche 6 bis 10, **dadurch gekennzeichnet, dass** zumindest ein Zusatzstoff durch Graphit gebildet ist mit einer Korngröße ausgewählt aus einem Bereich mit einer unteren Grenze von 2 µm und einer oberen Grenze von 8 µm.

12. Lagerelement (1) nach einem der Ansprüche 1 bis 11, **dadurch gekennzeichnet, dass** die Gleitlackschicht (5) mit einer Schichtdicke ausgebildet ist, ausgewählt aus einem Bereich mit einer unteren Grenze von 2 µm und einer oberen Grenze von 40 µm.

13. Lagerelement (1) nach einem der Ansprüche 1 oder 2, **dadurch gekennzeichnet, dass** der Gleitlack ein Polyimidharz, insbesondere ein Polyamidimidharz, Molybdändisulfid (MoS₂) und Graphit umfasst, wobei der Anteil des Polyimidharzes mit Lösungsmittel ausgewählt ist aus einem Bereich mit einer unteren Grenze von 60 % und einer oberen Grenze von 80 %, der Anteil von MoS₂ ausgewählt ist aus einem Bereich mit einer unteren Grenze von 15 % und einer oberen Grenze von 25 % und der Anteil an Graphit ausgewählt ist aus einem Bereich mit einer unteren Grenze von 5 % und einer oberen Grenze von 15 %.

14. Lagerelement (1) nach Anspruch 13, **dadurch gekennzeichnet, dass** ein Verhältnis von MoS₂ zu Graphit ausgewählt ist aus einem Bereich mit einer unteren Grenze von 1,5 : 1 und einer oberen Grenze von 4,5 : 1.

15. Lagerelement (1) nach einem der Ansprüche 1 bis 14, **dadurch gekennzeichnet, dass** die Gleitschicht (4) mit einer Schichtdicke ausgebildet ist, ausgewählt aus einem Bereich mit einer unteren Grenze von 10 µm und einer oberen Grenze von 30 µm.

16. Lagerelement (1) nach einem der Ansprüche 1 bis 15, **dadurch gekennzeichnet, dass** ein Verhältnis der Schichtdicke der Gleitschicht (4) zur Schichtdicke der Gleitlackschicht (5) ausgewählt ist aus einem Bereich mit einer unteren Grenze von 2 : 1 und einer oberen Grenze von 5 : 1.

17. Lagerelement (1) nach einem der Ansprüche 1 bis 16, **dadurch gekennzeichnet, dass** ein Verhältnis der Schichtdicke der Lagermetallschicht (3) zur Schichtdicke der Gleitschicht (4) ausgewählt ist aus einem Bereich mit einer unteren Grenze von 7 : 1 und einer oberen Grenze von 15:1.

18. Lagerelement (1) nach einem der Ansprüche 1 bis 17, **dadurch gekennzeichnet, dass** ein Verhältnis der Schichtdicke der Stützschicht (2) zur Schichtdicke der Lagermetallschicht (3) ausgewählt ist aus einem Bereich mit einer unteren Grenze von 7 : 1 und einer oberen Grenze von 15:1.

19. Lagerelement (1) nach einem der vorhergehenden Ansprüche, **dadurch gekennzeichnet, dass** die einzelnen Schichten zumindest bis auf Verunreinigungen bleifrei sind.

20. Lagerelement (1) nach einem der vorhergehenden Ansprüche, **dadurch gekennzeichnet, dass** dieses als Gleitlagerhalbschale oder Lagerbuchse oder Anlaufring ausgebildet ist.

## Claims

1. Bearing element (1) comprising a protective layer (2), a bearing metal layer (3) applied over the protective layer (2) and an anti-friction layer (4) applied by sputtering over the bearing metal layer (3), onto which a coating of anti-friction varnish (5) is applied, **characterised in that** the surface of the coating of anti-friction varnish (5) has an arithmetical mean roughness value Ra conforming to DIN EN ISO 4287 selected from a range with a lower limit of 0.02 µm and an upper limit of 1.5 µm.

2. Bearing element (1) as claimed in claim 1, **characterised in that** the coating of anti-friction varnish (5) has anisotropic mechanical properties.

3. Bearing element (1) as claimed in claim 1 or 2, **characterised in that** the coating of anti-friction varnish (5) contains at least one thermoplastic resin as its main constituent.

4. Bearing element (1) as claimed in claim 3, **characterised in that** the at least one thermoplastic resin is selected from a group comprising polyimides, in particular aromatic ones, polyamide imides, in particular aromatic ones, polyaryl ether imides, if necessary modified by isocyanates, phenolic resins, polyaryl ether-ether ketones, polyamides, in particular aromatic ones, epoxy resins, polytetrafluoroethylene, fluorine-containing resins, such as e.g. polyfluoroalkoxy-polytetrafluoroethylene-copolymers, ethylene-tetrafluoroethylene, fluoridated ethylene propylene copolymers, polyvinylidene difluoride, polyvinyl fluoride, allylene sulphide, polytriazo-pyromellitic imides, polyester imides, polyaryl sulphides, polyvinyl sulphides, polysulphones, polyaryl sulphones, polyaryl oxides, mixtures and copolymers thereof.

5. Bearing element (1) as claimed in claim 3 or 4, **characterised in that** the proportion of resin in the anti-friction varnish is selected from a range with a lower limit of 30 % by weight and an upper limit of 95 % by weight.

6. Bearing element (1) as claimed in one of claims 3 to 5, **characterised in that** the thermoplastic resin contains at least one additive, selected from a group comprising lubricants, such as e.g. MoS₂, h-BN, WS₂, graphite, polytetrafluoroethylene, Pb, Pb-Sn alloys, CF₂, PbF₂, hard materials such as e.g. CrO₃, Fe₃O₄, PbO, ZnO, CdO, Al₂O₃, SiC, Si₃N₄, SiO₂, Si₃N₄, clay, talc, TiO₂, mullite, CaC₂, Zn, AlN, Fe₃P, Fe₂B, Ni₂B, FeB, metal sulphides such as e.g. ZnS, Ag₂S, CuS, FeS, FeS₂, Sb₂S₃, PbS, Bi₂S₃, CdS, fibres, in particular inorganic fibres, such as e.g. glass, carbon, potassium titanite, whiskers, for example SiC, metal fibres, for example made of Cu or steel as well as mixtures thereof.

7. Bearing element (1) as claimed in one of the preceding claims, **characterised in that** the coating of anti-friction varnish (5) contains at least one additive which has a platelet-like habit.

8. Bearing element (1) as claimed in claim 6 or 7, **characterised in that** the additive is added in a proportion selected from a range with a lower limit of 5% and an upper limit of 30%.

9. Bearing element (1) as claimed in one of claims 6 to 8, **characterised in that** the at least one additive has a particle size selected from a range with a lower limit of 0.5 µm and an upper limit of 20 µm.

10. Bearing element (1) as claimed in one of claims 6 to 9, **characterised in that** at least one additive is provided in the form of molybdenum disulphide with a mean particle length selected from a range with a lower limit of 10 µm and an upper limit of 40 µm and/or a mean width selected from a range with a lower limit of 10 µm and an upper limit of 40 µm and/or a mean height selected from a range with a lower limit of 2 nm and an upper limit of 20 nm.

11. Bearing element (1) as claimed in one of claims 6 to 10, **characterised in that** at least one additive is provided in the form of graphite with a particle size selected from a range with a lower limit of 2 µm and an upper limit of 8 µm.

12. Bearing element (1) as claimed in one of claims 1 to 11, **characterised in that** the coating of anti-friction varnish (5) has a coating thickness selected from a range with a lower limit of 2 µm and an upper limit of 40 µm.

13. Bearing element (1) as claimed in claim 1 or 2, **characterised in that** the anti-friction varnish contains a polyimide resin, in particular a polyamide imide resin, molybdenum disulphide (MoS₂) and graphite, and the proportion of polyimide resin with solvent is selected from a range with a lower limit of 60% and an upper limit of 80%, the proportion of MoS₂ is selected from a range with a lower limit of 15% and an upper limit of 25% and the proportion of graphite is selected from a range with a lower limit of 5% and an upper limit of 15%.

14. Bearing element (1) as claimed in claim 13, **characterised in that** a ratio of MoS₂ to graphite is selected from a range with a lower limit of 1.5:1 and an upper limit of 4.5:1.

15. Bearing element (1) as claimed in one of claims 1 to 14, **characterised in that** the anti-friction layer (4) has a layer thickness selected from a range with a lower limit of 10 µm and an upper limit of 30 µm.

16. Bearing element (1) as claimed in one of claims 1 to 15, **characterised in that** a ratio of the layer thickness of the anti-friction layer (4) to the coating thickness of the coating of anti-friction varnish (5) is selected from a range with a lower limit of 2:1 and an upper limit of 5:1.

17. Bearing element (1) as claimed in one of claims 1 to 16, **characterised in that** a ratio of the layer thickness of the bearing metal layer (3) to the layer thickness of the anti-friction layer (4) is selected from a range with a lower limit of 7:1 and an upper limit of 15:1.

18. Bearing element (1) as claimed in one of claims 1 to 17, **characterised in that** a ratio of the layer thickness of the protective layer (2) to the layer thickness of the bearing metal layer (3) is selected from a range with a lower limit of 7:1 1 and an upper limit of 15:1.

19. Bearing element (1) as claimed in one of the preceding claims, **characterised in that** the individual layers are lead-free at least apart from impurities.

20. Bearing element (1) as claimed in one of the preceding claims, **characterised in that** it is designed as an anti-friction bearing half-shell or bearing bush or thrust ring.

## Revendications

1. Elément de palier (1) comprenant une couche de support (2), une couche de métal de palier (3) disposée au-dessus de la couche de support (2) et une couche de glissement (4) disposée au-dessus de la couche de métal de palier (3), appliquée par pulvérisation cathodique, sur laquelle est disposée une couche de vernis de glissement (5), **caractérisé en ce que** la surface de la couche de vernis de glissement (5) présente une valeur de rugosité arithmétique moyenne Ra selon DIN EN ISO 4287, sélectionnée dans une plage avec une limite inférieure de 0,02 µm et une limite supérieure de 1,5 µm.

2. Elément de palier (1) selon la revendication 1, **caractérisé en ce que** la couche de vernis de glissement (5) présente des propriétés mécaniques anisotropes.

3. Elément de palier (1) selon la revendication 1 ou 2, **caractérisé en ce que** la couche de vernis de glissement (5) contient comme composant principal au moins une résine thermoplastique.

4. Elément de palier (1) selon la revendication 3, **caractérisé en ce que** la au moins une résine thermoplastique est sélectionnée dans un groupe comprenant des polyimides, en particulier des polyamidimides aromatiques, en particulier des polyarylétherimides aromatiques, le cas échéant modifiés avec des isocyanates, résines phénoliques, polyaryléther-éthercétone, polyamides, en particulier aromatiques, résines époxy, polytétrafluoroéthylène, résines contenant du fluor, comme par exemple des copolymères de polyfluoroalcoxy-polytétrafluoroéthylène, éthylène-tétra-fluoroéthylène, copolymères d'éthylène-propylène fluorés, polyvinylidènedifluorure, polyvinylfluorure, allylènesulfure, poly-triazo-pyroméllithimides, polyesterimides, polyarylsulfides, polyvinylènesulfides, polysulfones, polyarylsulfones, polyaryloxydes, et des mélanges et copolymères de ceux-ci.

5. Elément de palier (1) selon la revendication 3 ou 4, **caractérisé en ce qu'**une partie en résine dans la laque de glissement est sélectionnée d'une plage avec une limite inférieure de 30% en poids et une limite supérieure de 95% en poids.

6. Elément de palier (1) selon l'une des revendications 3 à 5, **caractérisé en ce que** la résine thermoplastique contient au moins un additif, sélectionné dans un groupe comprenant des agents de glissement, comme par exemple MoS₂, h-BN, WS₂, graphite, polytétrafluoroéthylène, Pb, alliages Pb-Sn, CF₂, PbF₂, des durcissants, comme par exemple CrO₃, Fe₃O₄, PbO, ZnO, CdO, Al₂O₃, SiC, Si₃N₄, SiO₂, Si₃N₄, argile, talc, TiO₂, mullite, CaC₂, Zn, AIN, Fe₃P, Fe₂B, Ni₂B, FeB, des sulfures métalliques, comme par exemple ZnS, Ag₂S, CuS, FeS, FeS₂, Sb₂S₃, PbS, Bi₂S₃, CdS, des fibres, en particulier inorganiques, comme par exemple le verre, carbone, potassium titanate, trichite, par exemple SiC, des fibres métalliques, par exemple en Cu ou acier ainsi que leurs mélanges.

7. Elément de palier (1) selon l'une des revendications précédentes, **caractérisé en ce que** la couche de vernis de glissement (5) contient au moins un additif qui présente un habitus en forme de plaquette.

8. Elément de palier (1) selon la revendication 6 ou 7, **caractérisé en ce que** l'additif est ajouté en une partie, sélectionnée dans une plage avec une limite inférieure de 5% et une limite supérieure de 30%.

9. Elément de palier (1) selon l'une des revendications 6 à 8, **caractérisé en ce qu'**au moins un additif présente une grandeur de particules, sélectionnée dans une plage avec une limite inférieure de 0,5 µm et une limite supérieure de 20µm.

10. Elément de palier (1) selon l'une des revendications 6 à 9, **caractérisé en ce qu'**au moins un additif est formé par du molybdène sulfure avec une longueur moyenne des particules sélectionnée dans une plage avec une limite inférieure de 10µm et une limite supérieure de 40µm et/ou une largeur moyenne sélectionnée dans une plage avec une limite inférieure de 10µm et une limite supérieure de 40µm et/ou une hauteur moyenne sélectionnée dans une plage avec une limite inférieure de 2 nm et une limite supérieure de 20 nm.

11. Elément de palier (1) selon l'une des revendications précédentes 6 à 10, **caractérisé en ce qu'**au moins un additif est formé par du graphite avec une grandeur de grain sélectionnée dans une plage avec une limite inférieure de 2µm et une limite supérieure de 8µm.

12. Elément de palier (1) selon l'une des revendications 1 à 11, **caractérisé en ce que** la couche de vernis de glissement (5) est réalisée en une épaisseur de couche, sélectionnée dans une plage avec une limite inférieure de 2µm et une limite supérieure de 40µm.

13. Elément de palier (1) selon l'une des revendications 1 ou 2, **caractérisé en ce que** le vernis de glissement est une résine de polyimide, comprend en particulier une résine de polyamidimide, molybdène disulfide (MoS₂) et graphite, où la partie de la résine de polyimide avec solvant est sélectionnée dans une plage avec une limite inférieure de 60% et une limite supérieure de 80%, la partie en MoS₂ est sélectionnée dans une plage avec une limite inférieure de 15% et une limite supérieure de 25%, et la partie en graphite est sélectionnée dans une plage avec une limite inférieure de 5% et une limite supérieure de 15%.

14. Elément de palier (1) selon la revendication 13, **caractérisé en ce qu'**un rapport de MoS₂ au graphite est sélectionné dans une plage avec une limite inférieure de 1,5:1 et une limite supérieure de 4,5:1.

15. Elément de palier (1) selon l'une des revendications 1 à 14, **caractérisé en ce que** la couche de glissement (4) est réalisée en une épaisseur de couche, sélectionnée dans une plage avec une limite inférieure de 10µm et une limite supérieure de 30µm.

16. Elément de palier (1) selon l'une des revendications 1 à 15, **caractérisé en ce qu'**un rapport de l'épaisseur de couche de la couche de glissement (4) à l'épaisseur de couche de la couche de vernis de glissement (5) est sélectionné dans une plage avec une limite inférieure de 2:1 et une limite supérieure de 5:1.

17. Elément de palier (1) selon l'une des revendications 1 à 16, **caractérisé en ce qu'**un rapport de l'épaisseur de couche de la couche de métal de palier (3) à l'épaisseur de couche de la couche de glissement (4) est sélectionné dans une plage avec une limite inférieure de 7:1 et une limite supérieure de 15:1.

18. Elément de palier (1) selon l'une des revendications 1 à 17, **caractérisé en ce qu'**un rapport de l'épaisseur de couche de la couche de support (2) à l'épaisseur de couche de la couche de métal de palier (3) est sélectionné dans une plage avec une limite inférieure de 7:1 et une limite supérieure de 15:1.

19. Elément de palier (1) selon l'une des revendications précédentes, **caractérisé en ce que** les différentes couches sont sans plomb, au moins à part les impuretés.

20. Elément de palier (1) selon l'une des revendications précédentes, **caractérisé en ce que** celui-ci est réalisé comme demi-coque de palier de glissement ou comme douille de palier ou comme anneau d'usure.
